# FASCICULE DE BREVET EUROPEEN

(11) **EP 3 207 068 B1**
(45) Date de publication et mention de la délivrance du brevet: **16.06.2021**
(21) Numéro de dépôt: 15781114.2
(22) Date de dépôt: 15.10.2015
(51) Int. Cl.: C08F 220/34, C08F 226/02, C08F 230/02, C08F 8/40, C23G 1/00

(54) **POLYMÈRES POLYFONCTIONNELS À BASE D'UNITÉS PHOSPHONATES ET D'UNITÉS AMINES**
POLYFUNKTIONELLE POLYMERE AUF DER BASIS VON PHOSPHONATEINHEITEN UND AMINEINHEITEN
POLYFUNCTIONAL POLYMERS BASED ON PHOSPHONATE UNITS AND AMINE UNITS

(30) Priorité: 17.10.2014 FR 1402346
(43) Date de publication de la demande: 23.08.2017
(73) Titulaire: Rhodia Operations, 93300 Aubervilliers (FR)
(72) Inventeur: GONZALEZ, Inigo, F-69007 Lyon (FR); LABEAU, Marie-Pierre, F-92310 Sevre (FR); WOODWARD, Gary, Northwich Cheshire UK (GB)
(74) Mandataire: Valentino, Cédric
(86) Numéro de dépôt international: PCT/EP2015/073911
(87) Numéro de publication internationale: WO 2016/059168

(56) Documents cités:
- WO-A1-2008/012248
- DE-A1-102005 056 436
- US-A1- 2012 080 120
- TBAL H ET AL: "Functionalization and chelating properties of a porous polymer derived from vinylamine", EUROPEAN POLYMER JOURNAL, PERGAMON PRESS LTD. OXFORD, GB, vol. 28, no. 6, 1 juin 1992 (1992-06-01), pages 671-679, XP024053586, ISSN: 0014-3057, DOI: 10.1016/0014-3057(92)90041-Y [extrait le 1992-06-01]

## Description

La présente invention, telle que définie dans les revendications, a trait à des polymères polyfonctionnels adaptés notamment pour le traitement de surfaces métalliques destinées à être peintes, et à différentes voies d'accès à ces polymères.

Dans le domaine du traitement des surfaces métalliques, on connaît différents types de compositions permettant un nettoyage de surface et/ou une préparation de la surface à des traitements ultérieurs. Les techniques dites « de finition » (on emploie plus usuellement le terme anglais de «*metal finishing*») permettent de préparer la surface métallique, notamment pour optimiser le dépôt ultérieur de revêtement (peinture, vernis...) sur la surface métallique.

A titre d'exemple, il a été décrit différentes compositions aqueuses à base de polymères, notamment des résines acryliques, comme par exemple dans US4517028. WO2008/012248 A1 divulgue des solutions aqueuses de copolymères utilisés pour la passivation de surfaces métalliques, où les copolymères comprennent des unités acide phosphoniques, des amines et des fonctions hydroxyles.

Un but de la présente invention est de fournir des produits et formulations adaptées notamment au traitement de finition de surface métalliques destinées à être peintes.

A cet effet, la présente invention propose un nouveau type de polymère à base, qui peut, entre autres, être employé, seul ou en mélange avec d'autres additifs, pour le traitement de finition de surfaces métalliques destinées à être peintes, en particulier pour le traitement de surface de l'aluminium.

Plus précisément, selon un premier aspect, la présente invention a pour objet un polymère polyfonctionnel comprenant (et généralement consistant en) :
- des unités monomères u1, dites ci-après «unités phosphonate », porteuses de fonctions acide phosphonique -P(=O)(OH)₂ sous leur forme acide ou en tout ou partie sous forme déprotonée (phosphonate -PO₃²⁻ ou hydrogenophosphonate -P(=O)( (OH)O⁻)
- des unités monomères u2, dites ci-après« unités amine », porteuses de fonctions amines, éventuellement protonées en tout ou partie, incluant de préférence des amines primaires -NH₂ éventuellement protonées en tout ou partie sous forme d'ammonium -NH₃⁺
- des unités monomères u3, dites ci-après « unités alcool », porteuses de fonctions alcool -OH
- où les fonctions amines des unités monomères u2 comprennent des amines primaires -NH₂ éventuellement protonées en tout ou partie sous forme d'ammonium NH₃ ⁺.

Selon un autre aspect, la présente invention a pour objet des formulations adaptées entre autres pour le traitement de finition de surfaces métalliques, et notamment pour le traitement de finition de surface d'aluminium, comprenant au moins un polymère du type précité. L'utilisation de ces compositions pour le traitement de finition de surfaces métalliques, et notamment pour le traitement de finition de surface d'aluminium constitue un aspect plus spécifique de l'invention.

Un polymère selon la présente invention est porteur de deux types de fonctionnalités qui le rendent particulièrement adapté pour le traitement de surfaces métalliques destinées à être peintes, à savoir :
- les fonctions acide phosphoniques/phosphonate portées par les unités u1, qui assurent un ancrage du polymère sur la surface métallique, de façon particulièrement efficace notamment sur les surfaces d'aluminium ;
- les fonctions amines portées par les unités u2 et les fonctions alcools portées par les unités u3, qui sont propres à réagir avec les molécules classiquement employées dans les peintures, à savoir en particulier :
   - les fonctions isocyanate -NCO
   - les fonctions époxydes

La seule présence des unités phosphonate u1 et des unités amine u2 suffit à assurer le double effet (i) d'ancrage sur la surface métallique et (ii) d'accroche de la peinture déposée ultérieurement. Cela étant, notamment pour des raisons de coûts, il peut être intéressant de substituer une partie des fonctions amines par des fonctions alcool.

Ainsi, le polymère P selon l'invention comprend des unités u3 en plus des unités u2. Le cas échéant, on préfère que le ratio molaire amine/alcool, correspondant à la quantité totale de fonctions amines présente sur le polymère rapporté à la quantité totale de fonction alcool présente sur le polymère soit compris entre 1 :4 et 4:1, ce ratio molaire amine/alcool étant typiquement compris entre 1 :2 et 2 :1 Par ailleurs, il est préférable que le ratio molaire amine primaire/alcool, correspondant à la quantité totale de fonctions amines primaires présente sur le polymère rapporté à la quantité totale de fonction alcool présente sur le polymère soit compris entre 1 :4 et 4:1 , ce ratio molaire amine primaire/alcool étant de préférence entre 1 :2 et 2 :1.

Selon un mode de réalisation particulier, un polymère selon l'invention peut comprendre, à titre de tout ou partie de ses unités u2, des unités mixtes, porteuses à la fois de fonctions amine (éventuellement protonées en tout ou partie) et de fonction alcool. Des unités u2 mixtes de ce type incluent par exemple le chitosan, ou la chitine partiellement hydrolysée Dans ce cas de figure, tout ou partie des unités u3 est confondu avec ces unités u2 porteuses à la fois de fonctions animes (éventuellement protonées en tout ou partie) et de fonction alcool.

Selon une variante particulière de l'invention, les polymères du type précités peuvent comprendre, en plus des fonctions phosphonate et amines/alcool précitées, des groupes hydrophobes, typiquement sous forme de chaînes pendantes, typiquement des groupe alkyles ou alcényles, linéaires ou ramifiés en C8 à C22. Les polymères selon l'invention qui présentent de tels groupes hydrophobes sont notamment utiles pour modifier des surfaces métalliques (notamment des surfaces d'aluminium) et leur conférer un effet anti-usure. Ces groupes hydrophobes peuvent être facilement incorporés aux polymères selon l'invention soit pendant leur synthèse (comme cela est illustré ci-dessous dans la présente description) ou bien, alternativement, en post-modification : il est par exemple très aisé de greffer un groupe hydrophobe, noté ci-après -RH, en utilisant comme point d'accroche une partie des groupes amines (et/ou tout ou partie des groupes OH le cas échéant) :
- on peut par exemple faire réagir une partie des groupes amines portés par un polymère selon l'invention avec un acide carboxylique RH-COOH (ce par quoi on lie le groupe RH au polymère via une fonction amide), ou bien, plus avantageusement avec un halogénure d'alkyle RH-X où X est un halogène, notamment Cl, (ce par quoi on lie le groupe RH au polymère via une fonction amine N-RH particulièrement stable)
- on peut, alternativement ou en complément, faire réagir une partie des groupes alcools portés par un polymère selon l'invention avec un acide carboxylique RH-COOH (ce par quoi on lie le groupe RH au polymère *via* une fonction ester), ou bien, plus avantageusement en convertissant le groupe alcool en une fonction éther -O-RH, plus stable.

Selon un autre aspect, la présente invention a pour objet différentes voies d'accès au polymère polyfonctionnel de l'invention :
▪ Un premier procédé de préparation d'un polymère selon l'invention comprend :
- une étape (E1) de polymérisation radicalaire d'un mélange comprenant :
   - des monomères m1 (précurseurs des unités phosphonate u1 du polymère), éthyléniquement insaturés et porteurs de fonctions acide phosphonique - P(=O)(OH)₂ sous leur forme acide ou en tout ou partie sous forme déprotonée, typiquement des monomères acide vinylphosphonique (VPA) de formule CH2=CH-P(O)(OH)₂ et/ou des monomères acide vinyl diphosphonique (VDPA) de formule CH₂=C(-P0₃H₂)₂, de préférence des monomères acide vinylphosphonique (VPA) ;
   - des monomères m2 (précurseurs des unités amines u2 du polymère) éthyléniquement insaturés et porteurs de fonctions amines protégées, typiquement des monomères N-vinylformamide ou N-vinylacétamide
   - des monomères m3 (précurseurs des unités alcool u3 du polymère) éthyléniquement insaturés et porteurs de fonctions alcool protégées typiquement des monomères acétate de vinyle,
      ce par quoi on obtient un polymère P1 porteur de fonctions phosphonate, amine protégée et alcool protégé ; puis
- une étape (E2) de déprotection (typiquement par hydrolyse) d'au moins une partie des fonctions amine protégées, et des fonctions alcool protégées, du polymère P1 obtenu dans l'étape (E1).

L'étape (E1) est typiquement une réaction où l'ensemble des monomères m1, m2 et m3 est mis en contact en présence d'une source de radicaux libres, ce par quoi on obtient à l'issue de l'étape (E1) un polymère P1 de type statistique (avec optionnellement des gradients de concentrations au sein du polymère en fonction des réactivités des monomères en présence).

Alternativement, la polymérisation des monomères m1, m2 et m3 peut être réalisée séquentiellement lors de l'étape (E1), auquel cas le polymère P1 peut être un copolymère séquencé (à blocs). Ainsi, selon une variante intéressante, l'étape (E1) peut par exemple comporter, de façon séparée : (i) la polymérisation radicalaire des monomères m1 avec une partie seulement des monomères m2 et m3, conduisant à la formation d'un bloc riche en unités phosphonate ; et (ii) la polymérisation radicalaire d'un mélange comprenant le reste des monomères m2 et m3, conduisant à la formation d'un bloc exempt d'unités phosphonate.

Les polymères particuliers du type obtenu selon les étapes (E1) et (E2), constituent un autre objet particulier de la présente invention.

L'étape (E1) met typiquement en œuvre des monomères m2 et m3 ayant des fonctions amines et alcool sous forme protégées, typiquement sous la forme d'un amide pour les fonctions amine ; et sous forme d'ester pour les fonctions alcool. Cette protection s'avère généralement nécessaire dans la mesure où les monomères insaturés porteurs de fonctions amines et alcool ne sont en général pas stables.

Dans l'étape (E2), on effectue une déprotection des fonctions, typiquement par hydrolyse acide ou basique d'au moins une partie des fonctions amides et/ou ester.

Lors de la déprotection des fonctions protégées dans l'étape (E2), il est possible de modifier une partie des fonctions amines ou alcools pour greffer sur le polymère des chaînes hydrophobes RH du type précité, notamment des groupe alkyles ou alcényles, linéaires ou ramifiés en C8 à C22. Cela peut notamment être effectué par une réaction de transestérification.

De préférence, au moins une partie (et de préférence la totalité) des groupes acide phosphonique, amine protégée et alcool protégé portés par les monomères m1, m2 et m3 de l'étape (E1) sont en alpha de la liaison éthyléniquement insaturée, ce par quoi les fonctions acide phosphonique, amine et alcool dans le polymère final sont particulièrement bien stabilisées sur le squelette du polymère.

A noter qu'il n'est pas exclu, selon une alternative particulière, d'employer des monomères m2 et/ou m3 porteurs de fonctions amines et/ou alcool non protégées, si le monomère correspondant est stable, mais de tels cas sont rares.

▪ Un autre procédé de préparation d'un polymère selon l'invention comprend une étape (E) de greffage de monomères m porteurs de fonctions acide phosphonique (sous leur forme acide ou en tout ou partie sous forme déprotonée) sur un polymère de base (désigné aussi ci-après « pré-polymère P₀») comprenant des unités u2 et des unités u3 du type précité.

Selon ce mode de réalisation, le pré-polymère P₀ est avantageusement porteur de groupes amines primaires -NH2 et/ou secondaire (éventuellement protonés), et il est avantageux qu'il comporte des groupes amines primaires (typiquement, toutes les fonctions amine portées par le pré-polymère P₀ sont des amines primaires -NH2 (éventuellement protonées en tout ou partie).

Pour assurer le post-greffage de l'étape (E), Les monomères m employés dans cette étape sont à la fois porteurs des fonctions acide phosphonique (éventuellement en tout ou partie déprotonée) précitées (les monomères m sont en cela les précurseurs des unités phosphonate u1 du polymère obtenu in fine), et de fonctions capables de réagir avec au moins une partie des fonctions amines (et éventuellement des fonctions alcools dans certains cas) portées par le pré-polymère P₀ former une liaison covalente entre ledit pré-polymère et le monomère m, ce qui conduit à la fonctionnalisation du pré-polymère P₀ par des fonctions acide phosphonique (éventuellement en tout ou partie déprotonées).

La mise en œuvre de l'étape (E) conduit à des polymères particulier, porteurs de groupe latéraux portant des groupes acide phosphonique (sous forme acide ou en tout ou partie sous forme déprotonée), issus du greffage des monomères m sur le squelette du pré-polymère. Ces polymères particuliers, du type obtenu selon l'étape de greffage (E), constituent encore un autre objet particulier de la présente invention.

Selon une première variante possible de l'étape (E), les monomères m employés sont porteurs de fonctions aldéhyde, époxy ou halogène (-Cl, -Br, notamment), qui sont propres à former des liaisons covalentes en réagissant avec les fonctions amines portées par le pré-polymère P₀.

Selon une variante intéressante, le post-greffage de l'étape (E) est effectué en faisant réagir le pré-polymère P₀ avec des monomères m qui sont des monomères m1 du type précité, à savoir des monomères porteurs de fonctions acide phosphonique (éventuellement en tout ou partie déprotonées) qui sont spécifiquement éthyléniquement insaturés. Dans ce cas, ce sont les fonctions éthyléniquement insaturées qui permettent, par réaction avec les amines, de former une liaison covalente.

Typiquement, à titre de monomère m éthyléniquement insaturé pour l'étape (E), on peut employer l'acide vinylphosphonique (VPA), ou, plus avantageusement encore, l'acide vinyl diphosphonique (VDPA) de formule CH₂=C(-PO₃H₂)₂.

En particulier lorsqu'on emploie un de ces deux acides, notamment le VDPA, à titre de monomère m pour effectuer le greffage de l'étape (E), la réaction entre le pré-polymère P₀ et les monomères m est avantageusement conduite à un pH inférieur à 8, plus préférentiellement inférieur à 7.

De façon surprenante, il a maintenant été mis en évidence que les groupes amines (notamment les amines primaires) présents sur le pré-polymère P₀ réagissent avec les doubles liaisons des monomères m1 précités (en particulier le VDPA) selon un mécanisme de type addition de Michaël, et ce de façon tout particulièrement efficace lorsque ces composés sont mis en milieu acide. Cette addition en milieu acide s'avère tout à fait inattendue, dans la mesure où il est bien connu qu'une addition de Michaël est justement plutôt favorisée en conditions basiques.

Lorsqu'on met en œuvre l'étape (E), on peut, en parallèle du greffage des fonctions phosphonate sur le pré-polymère P₀ greffer d'autres fonctions sur le pré-polymère, en employant des monomères similaires aux monomères m mais portant d'autres fonctions. Par exemple, on peut greffer sur le pré-polymère P₀ des groupes hydrophobes RH du type précité, notamment des groupe alkyles ou alcényles, linéaires ou ramifiés en C8 à C22.

Quelle que soit la nature des monomères m employés dans l'étape (E), le pré-polymère P₀ peut typiquement être, de façon non limitative :
- un polymère commercial comprenant des unités amines u2 et des unités alcool u3 du type précité, comme par exemple les polymères Lupamine commercialisées par BASF, ou encore les polymères alcool vinylique - vinyl amine disponibles auprès de la société ERKOL, ou bien encore les polyéthylène imines (PEI) et PEI éthoxylées commercialisées par BASF sous le nom de Lupasol;
   ou
- un polymère naturel comprenant des unités amines u2 et des unités alcool u3 du type précité, comme par exemple le chitosan ou bien encore de la chitine partiellement hydrolysée ;
   ou
   - un polymère préparé selon un procédé comportant :
      - une étape (E₀₁) de polymérisation radicalaire de monomères m2 éthyléniquement insaturés et porteurs de fonctions amines protégées (typiquement des monomères N-vinylformamide ou N-vinylacétamide) et de monomères m3 éthyléniquement insaturés et porteurs de fonctions alcool protégées (typiquement des monomères acétate de vinyle), conduisant à un polymère P₀₁ porteur de fonctions amine protégée et alcool protégé; puis
      - une étape (E₀₂) de déprotection (typiquement par hydrolyse) d'au moins une partie des fonctions amine protégées, et des fonctions alcool protégées, du polymère P₀₁ obtenu dans l'étape (E₀₁)

Différents avantages et modes de réalisation particuliers de l'invention vont maintenant être décrits plus en détails.

### Le polymère polyfonctionnel selon l'invention

Le polymère selon l'invention, quel que soit son mode de préparation, est un polymère comprenant des unités phosphonate (u1), des unités amine (u2) et des unités alcool (u3), et consistant typiquement en des unités phosphonate (u1), des unités amine (u2) et des unités alcool (u3).

De préférence, dans un polymère selon l'invention, la teneur en unités phosphonate, correspondant au rapport de la quantité totale de fonctions acide phosphonique (sous forme acide ou en tout ou partie sous forme déprotonée) sur la quantité totale de fonctions acide phosphonique (sous forme acide ou en tout ou partie sous forme déprotonée), amine (éventuellement protonées en tout ou partie) et alcool est comprise entre 1 et 50 % en mole, typiquement entre 2 et 40 % en mole, par exemple entre 3 et 20% en mole.

Dès lors, dans un polymère selon l'invention, la teneur totale en unités amine et alcool, correspondant au rapport de la quantité totale de fonctions amine (éventuellement protonées en tout ou partie) et alcool sur la quantité totale de fonctions acide phosphonique (sous forme acide ou en tout ou partie sous forme déprotonée), amine (éventuellement protonées en tout ou partie) et alcool est de préférence comprise entre 50 et 99 % en mole, typiquement entre 70 et 95 % en mole.

Dans un polymère selon l'invention, la teneur en unités amine, correspondant au rapport de la quantité totale de fonctions amine (éventuellement protonées en tout ou partie) sur la quantité totale de fonctions acide phosphonique (sous forme acide ou en tout ou partie sous forme déprotonée), amine (éventuellement protonées en tout ou partie) et alcool est de préférence comprise entre 5 et 50 % en mole, typiquement entre 10 et 40 % en mole.

Dans un polymère selon l'invention, lorsque des unités alcool sont présentes, la teneur en unités alcool, correspondant au rapport de la quantité totale de fonctions alcool rapportées à la quantité totale de fonctions acide phosphonique (sous forme acide ou en tout ou partie sous forme déprotonée), amine (éventuellement protonées en tout ou partie) et alcool est de préférence comprise entre 40 et 95 % en mole, typiquement entre 50 et 90 % en mole.

Typiquement, un polymère selon l'invention a une teneur en unités phosphonate de 5 à 15% en mole ; une teneur en unités amine de 10 à 30% en mole ; et une teneur en unités amine de 55 à 85 % en mole.

Par ailleurs, Un polymère selon l'invention a typiquement une masse moléculaire moyenne en poids (Mw) inférieure à 1 000 000 g/mol, de préférence inférieure à 500 000 g/mol voir inférieure à 250 000 g/mol, par exemple entre 10 000 et 100 000 g/mol. La masse moléculaire moyenne en poids à laquelle il est fait référence ici peut typiquement être mesurée par GPC.

Un polymère selon l'invention a typiquement une structure relativement linéaire, en particulier lorsqu'il est synthétisé selon les étapes (E1) et (E2) précitées. Il n'est toutefois pas exclu qu'il puisse présenter une structure ramifiée. Selon encore un autre mode de réalisation particulier, il peut également présenter une structure réticulé.

De même, le pré-polymère P₀ employé dans l'étape (E) est souvent un polymère linéaire, ce par quoi le polymère obtenu par greffage des monomères m sur ce polymère a lui aussi, une structure relativement linéaire, de type « peigne à dent courtes », avec des groupes phosphonate pendant le long d'une chaîne linéaire comportant des unités amines. Toutefois, là encore, il n'est pas exclu de partir d'un pré-polymère P₀ ramifié, voire réticulé, ce par quoi on obtient un polymère ramifié ou réticulé.

### Préparation d'un polymère polyfonctionnel selon les étapes (E1) et (E2)

L'étape de polymérisation radicalaire mise en œuvre dans l'étape (E1) peut être conduite selon tout moyen connu en soi.

Typiquement, mais de façon non limitative, l'étape (E1) peut être conduite en additionnant progressivement les monomères m2 à un pied de cuve contenant les monomères m1 et m3».

L'amorçage de la polymérisation radicalaire peut se faire selon tout moyen connu en soi et compatible avec les monomères employés.

Selon un mode de réalisation particulier, l'étape (E1) peut être une polymérisation radicalaire contrôlée, conduite en présence d'un agent de contrôle de polymérisation radicalaire.

Par *"agent de contrôle de polymérisation radicalaire",* on entend, au sens de la présente description, un composé capable de rallonger le temps de vie des chaînes polymères en croissance dans une réaction de polymérisation et de conférer à la polymérisation un caractère vivant et contrôlé. Cet agent de contrôle est typiquement un agent de transfert réversible tel que mis en œuvre dans les polymérisations radicalaires contrôlées désignés sous la terminologie RAFT ou MADIX, qui mettent typiquement en œuvre un procédé de transfert réversible par addition-fragmentation, comme ceux décrits par exemple dans WO96/30421, WO 98/01478, WO 99/35178, WO 98/58974, WO 00/75207, WO 01/42312, WO 99/35177, WO 99/31144, FR2794464 ou WO 02/26836.

Selon un mode de réalisation intéressant, l'agent de contrôle de polymérisation radicalaire employé est un composé qui comprend un groupe thiocarbonylthio -S(C=S)-. Ainsi, par exemple, il peut s'agir d'un composé qui comprend un groupe xanthate (porteur de fonctions -SC=S-O-), par exemple un xanthate. D'autres types d'agent de contrôle peuvent être envisagés (par exemple du type de ceux employé en CRP ou en ATRP).

Selon un mode particulier, l'agent de contrôle employé peut être une chaîne polymère issue d'une polymérisation radicalaire contrôlée et porteuse d'un groupement propre à contrôler une polymérisation radicalaire (chaîne polymère dite de type « vivante », de type bien connu en soi). Ainsi, par exemple, l'agent de contrôle peut être une chaîne polymère (de préférence hydrophile ou hydrodispersible) fonctionnalisée en bout de chaîne par un d'une par un groupe xanthate ou plus généralement comprenant un groupe -SC=S-, par exemple obtenu selon la technologie MADIX

Ainsi, un agent de contrôle de polymérisation radicalaire intéressant selon l'invention peut par exemple répondre à la formule (A) ci-dessous : 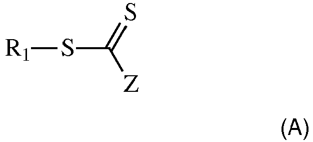 dans laquelle :
- Z représente :
   - un atome d'hydrogène,
   - un atome de Chlore,
   - un radical alkyl éventuellement substitué, aryl éventuellement substitué,
   - un hétérocycle éventuellement substitué,
   - un radical alkylthio éventuellement substitué,
   - un radical arylthio éventuellement substitué,
   - un radical alkoxy éventuellement substitué,
   - un radical aryloxy éventuellement substitué,
   - un radical amino éventuellement substitué,
   - un radical hydrazine éventuellement substitué,
   - un radical alkoxycarbonyl éventuellement substitué,
   - un radical aryloxycarbonyl éventuellement substitué,
   - un radical carboxy, acyloxy éventuellement substitué,
   - un radical aroyloxy éventuellement substitué,
   - un radical carbamoyle éventuellement substitué,
   - un radical cyano,
   - un radical dialkyl- ou diaryl-phosphonato,
   - un radical dialkyl-phosphinato ou diaryl-phosphinato, ou
   - une chaîne polymère,
      et
- R₁ représente :
   - un groupe alkyle, acyle, aryle, aralkyle, alcène ou alcyne éventuellement substitué,
   - un cycle carboné ou un hétérocycle, saturé ou non, aromatique éventuellement substitué, ou
   - une chaîne polymère, de préférence hydrophile ou hydrodispersible lorsque l'agent est mis en œuvre dans l'étape (E).

Les groupes R₁ ou Z, lorsqu'ils sont substitués, peuvent l'être par des groupes phényles éventuellement substitués, des groupes aromatiques éventuellement substitués, des cycles carbonés saturés ou non, des hétérocycles saturé ou non, ou des groupes : alkoxycarbonyle ou aryloxycarbonyle (-COOR), carboxy (-COOH), acyloxy (-O₂CR), carbamoyle (-CONR₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR₂), halogène, perfluoroalkyle CₙF₂ₙ₊₁, allyle, époxy, alkoxy (-OR), S-alkyle, S-aryle, des groupes présentant un caractère hydrophile ou ionique tels que les sels alcalins d'acides carboxyliques, les sels alcalins d'acide sulfonique, les chaînes polyoxyde d'alkylène (PEO, POP), les substituants cationiques (sels d'ammonium quaternaires), R représentant un groupe alkyle ou aryle, ou une chaîne polymère.

Les groupes alkyle, acyle, aryle, aralkyle ou alcyne éventuellement substitués présentent généralement 1 à 20 atomes de carbone, de préférence 1 à 12, et plus préférentiellement 1 à 9 atomes de carbone. Ils peuvent être linéaires ou ramifiés. Ils peuvent être également substitués par des atomes d'oxygène, sous forme notamment d'esters, des atomes de soufre ou d'azote.

Parmi les radicaux alkyle, on peut notamment citer le radical méthyle, éthyle, propyle, butyle, pentyle, isopropyle, tert-butyle, pentyle, hexyle, octyle, decyle ou dodécyle.

Les groupes alcynes sont des radicaux généralement de 2 à 10 atomes de carbone, ils présentent au moins une insaturation acétylénique, tel que le radical acétylenyle.

Le groupe acyle est un radical présentant généralement de 1 à 20 atomes de carbone avec un groupement carbonyle.

Parmi les radicaux aryle, on peut notamment citer le radical phényle, éventuellement substitué notamment par une fonction nitro ou hydroxyle.

Parmi les radicaux aralkyle, on peut notamment citer le radical benzyle ou phénéthyle, éventuellement substitué notamment par une fonction nitro ou hydroxyle.

Lorsque R₁ ou Z est une chaîne polymère, cette chaîne polymère peut être issue d'une polymérisation radicalaire ou ionique ou issue d'une polycondensation.

Avantageusement, on utilise comme agent de contrôle, des composés porteurs d'une fonction xanthate -S(C=S)O-, trithiocarbonate, des dithiocarbamate, ou dithiocarbazate, par exemple porteurs d'une fonction O-ethyl xanthate de formule -S(C=S)OCH₂CH₃ .

L'emploi d'un agent de contrôle de polymérisation du type précité est tout particulièrement intéressant lorsqu'on souhaite réaliser des blocs de nature différente dans l'étape (E1).
Quelle que soit la nature de l'étape (E1), les monomères m1 mis en œuvre dans cette précurseurs des unités phosphonate u1 du polymère, peuvent être choisis parmi les monomères acides vinyl phosphoniques, en particulier l'acide vinylphosphonique (VPA) de formule CH2=CH-P(O)(OH)₂ et/ou l'acide vinyl diphosphonique (VDPA) de formule CH₂=C(-P0₃H₂)₂
Les monomères m2 mis en œuvre dans l'étape (E1), précurseurs des unités amine u2 du polymère, peuvent quant à eux être choisis parmi les monomères de type amides vinyliques, tels que le N-vinylformamide ou N-vinylacétamide
Les monomères m3 mis en œuvre dans l'étape (E1), précurseurs des unités alcool u3 du polymère, peuvent notamment être choisis parmi les esters vinyliques tels que le l'acétate de vinyle.

L'étape de déprotection des fonctions amine protégées, et des fonctions alcool protégées, de l'étape (E2) peut quant à elle être effectuée par une hydrolyse acide ou basique, dans des conditions bien connues en soi.

### Préparation d'un polymère polyfonctionnel selon l'étapes (E)

Le greffage de l'étape (E) est généralement réalisé très simplement, en mettant en contact les monomères m et le pré-polymère P₀

Le pré-polymère P₀ peut, au besoin, être synthétisé selon un procédé de polymérisation radicalaire qui peut employer un agent de contrôle de polymérisation radicalaire du type décrit ci-dessus pour l'étape (E1), ce qui permet, en cas de nécessité, d'obtenir des pré-polymère de taille et /ou architecture contrôlée (blocs par exemple).

Selon un mode de réalisation intéressant, les monomères m sont des monomères m1 du type précité, par exemple l'acide vinylphosphonique (VPA) et/ou l'acide vinyl diphosphonique (VDPA). Avantageusement, les monomères m comprennent (voire consistent en) des monomères acide vinyl diphosphonique (VDPA) de formule CH₂=C(-P0₃H₂)₂.

### Exemples d'utilisation d'un polymère polyfonctionnel selon l'invention

Un polymère selon l'invention peut, entre autres applications, être employé pour le traitement de finition de surfaces métalliques destinées à être peintes ou vernies (« metal finishing »), en particulier pour le traitement de surface de l'aluminium. Dans ce cadre, le polymère est typiquement employé au sein d'une formulation à base aqueuse.

Le polymère de l'invention peut plus généralement être employé pour le nettoyage de surfaces métalliques.

Les polymères selon l'invention, lorsqu'ils sont porteurs de groupes hydrophobes, ou post-greffés par de tels groupement hydrophobes peuvent être employés pour assurer un effet anti-usure à une surface métallique, notamment une surface d'aluminium. Schématiquement, les polymères selon l'invention s'immobilisent sur la surface métallique où ils maintiennent les groupes hydrophobes qui sont donc en position d'assurer un effet de protection de la surface métallique lorsque celle-ci est soumise à un frottement.

## Revendications

1. Polymère polyfonctionnel comprenant:
- des unités monomères u1 porteuses de fonctions acide phosphonique - P(=O)(OH)₂ sous forme acide ou, en tout ou partie, sous forme déprotonée ;
- des unités monomères u2 porteuses de fonctions amines, éventuellement protonées en tout ou partie ;
- des unités monomères u3 porteuses de fonctions alcool -OH.
où les fonctions amines des unités monomères u2 comprennent des amines primaires -NH₂ éventuellement protonées en tout ou partie sous forme d'ammonium NH₃⁺.

2. Polymère polyfonctionnel selon la revendication 1, où toutes les fonctions amines des unités monomères u2 sont des amines primaires -NH₂ éventuellement protonées en tout ou partie sous forme d'ammonium NH₃⁺.

3. Polymère polyfonctionnel selon la revendication 1 ou 2, qui comporte des unités monomères u3 porteuses de fonctions alcool -OH, avec un ratio molaire amine/alcool correspondant à la quantité totale de fonctions amines présente sur le polymère rapporté à la quantité totale de fonction alcool présente sur le polymère de préférence compris entre 1 :4 et 4 :1.

4. Polymère polyfonctionnel selon l'une des revendications 1 à 3, qui comprend en outre des groupes hydrophobes, de préférences des groupe alkyles ou alcényles, linéaires ou ramifiés en C8 à C22.

5. Procédé de préparation d'un polymère polyfonctionnel selon l'une des revendications 1 à 4, qui comprend :
- une étape (E1) de polymérisation radicalaire d'un mélange comprenant :
- des monomères m1, éthyléniquement insaturés et porteurs de fonctions acide phosphonique -P(=O)(OH)₂ sous leur forme acide ou en tout ou partie sous forme déprotonée, de préférence des monomères acide vinylphosphonique CH2=CH-P(O)(OH)₂ et/ou des monomères acide vinyl diphosphonique CH₂=C(-P0₃H₂)₂ ;
- des monomères m2 éthyléniquement insaturés et porteurs de fonctions amines protégées, de préférence des monomères N-vinylformamide ou N-vinylacétamide
- des monomères m3 éthyléniquement insaturés et porteurs de fonctions alcool protégées, comme par exemple des monomères acétate de vinyle,
ce par quoi on obtient un polymère P1 porteur de fonctions phosphonate, amine protégée, et alcool protégé ;
puis
- une étape (E2) de déprotection (typiquement par hydrolyse) d'au moins une partie des fonctions amine protégées, et des fonctions alcool protégées, du polymère P1 obtenu dans l'étape (E1).

6. Procédé de préparation d'un polymère polyfonctionnel selon l'une des revendications 1 à 4, qui comprend une étape (E) de greffage de monomères m porteurs de fonctions acide phosphonique, sous leur forme acide ou en tout ou partie sous forme déprotonée, sur un polymère de base comprenant des unités monomères u2 porteuses de fonctions amines, éventuellement protonées en tout ou partie, et, des unités monomères u3 porteuses de fonctions alcool -OH.

7. Procédé de préparation selon revendication 6, où les monomères m sont :
- des monomères porteurs de fonctions aldéhyde, époxy ou halogène (-Cl, -Br, notamment), qui sont propres à former des liaisons covalentes en réagissant avec les fonctions amines portées par le polymère de base ;
ou
- des monomères porteurs de fonctions acide phosphonique qui sont en outre éthyléniquement insaturés, notamment des monomères acide vinylphosphonique ou acide vinyl diphosphonique.

8. Procédé de préparation selon revendication 7, où les monomères m sont des monomères acide vinylphosphonique ou acide vinyl diphosphonique, et où la réaction entre les monomères m et le polymère de base de l'étape (E) est conduite à un pH inférieur à 8, plus préférentiellement inférieur à 7.

9. Utilisation d'un polymère selon l'une des revendications 1 à 4, par exemple obtenu ou susceptible d'être obtenu selon le procédé de l'une des revendications 5 à 9, pour le traitement de finition de surfaces métalliques, notamment des surfaces d'aluminium, destinées à être peintes ou vernies, ou pour le nettoyage de surface métalliques.

10. Utilisation d'un polymère selon la revendication 4, pour assurer un effet anti-usure à une surface métallique, notamment une surface d'aluminium.

## Patentansprüche

1. Polyfunktionelles Polymer, umfassend:
- Monomereinheiten u1, die Phosphonsäurefunktionen -P(=O) (OH)₂ in Säureform oder ganz oder teilweise in deprotonierter Form tragen;
- Monomereinheiten u2, die Aminfunktionen, die gegebenenfalls ganz oder teilweise protoniert sind, tragen;
- Monomereinheiten u3, die Alkoholfunktionen -OH tragen;
wobei die Aminfunktionen der Monomereinheiten u2 primäre Amine -NH₂, die gegebenenfalls ganz oder teilweise in Ammoniumform NH₃⁺ protoniert sind, umfassen.

2. Polyfunktionelles Polymer nach Anspruch 1, wobei es sich bei allen Aminfunktionen der Monomereinheiten u2 um primäre Amine -NH₂, die gegebenenfalls ganz oder teilweise in Ammoniumform NH₃⁺ protoniert sind, handelt.

3. Polyfunktionelles Polymer nach Anspruch 1 oder 2, das Monomereinheiten u3, die Alkoholfunktionen -OH tragen, umfasst, wobei das Amin/Alkohol-Molverhältnis, das der Gesamtmenge der in dem Polymer vorliegenden Aminfunktionen in Bezug auf die Gesamtmenge der in dem Polymer vorliegenden Alkoholfunktionen entspricht, vorzugsweise zwischen 1:4 und 4:1 liegt.

4. Polyfunktionelles Polymer nach einem der Ansprüche 1 bis 3, das außerdem hydrophobe Gruppen, vorzugsweise lineare oder verzweigte C8- bis C22-Alkyl- oder -Alkenylgruppen, umfasst.

5. Verfahren zur Herstellung eines polyfunktionellen Polymers nach einem der Ansprüche 1 bis 4, das Folgendes umfasst:
- einen Schritt (E1) der radikalischen Polymerisation einer Mischung, umfassend:
- ethylenisch ungesättigte Monomere m1, die Phosphonsäurefunktionen -P(=O)(OH)₂ in ihrer Säureform oder ganz oder teilweise in deprotonierter Form tragen, vorzugsweise Vinylphosphonsäure-Monomere CH₂=CH-O(O)(OH)₂ und/oder Vinyldiphosphonsäure-Monomere CH₂=C(-PO₃H₂)₂;
- ethylenisch ungesättigte Monomere m2, die geschützte Aminfunktionen tragen, vorzugsweise N-Vinylformamid- oder N-Vinylacetamid-Monomere;
- ethylenisch ungesättigte Monomere m3, die geschützte Alkoholfunktionen tragen, wie beispielsweise Vinylacetat-Monomere;
wodurch man ein Polymer P1 erhält, das Phosphonat-, geschützte Amin- und geschützte Alkoholfunktionen trägt;
dann
- einen Schritt (E2) der Entschützung (typischerweise durch Hydrolyse) mindestens eines Teils der geschützten Aminfunktionen und der geschützten Alkoholfunktionen des in Schritt (E1) erhaltenen Polymers P1.

6. Verfahren zur Herstellung eines polyfunktionellen Polymers nach einem der Ansprüche 1 bis 4, das einen Schritt (E) des Aufpfropfens von Monomeren m, die Phosphonsäurefunktionen in ihrer Säureform oder ganz oder teilweise in deprotonierter Form tragen, auf ein Basispolymer, das Monomereinheiten u2, die Aminfunktionen, die gegebenenfalls ganz oder teilweise protoniert sind, tragen, und Monomereinheiten u3, die Alkoholfunktionen -OH tragen, umfasst.

7. Herstellungsverfahren nach Anspruch 6, wobei es sich bei den Monomeren m um
- Monomere, die Aldehydfunktionen, Epoxidfunktionen oder Halogenfunktionen (insbesondere -Cl, -Br) tragen, die durch Reaktion mit den Aminfunktionen, die das Basispolymer trägt, kovalente Bindungen bilden können; oder
- Monomere, die Phosphonsäurefunktionen tragen und außerdem ethylenisch ungesättigt sind, insbesondere Vinylphosphonsäure-Monomere oder Vinyldiphosphonsäure-Monomere,
handelt.

8. Herstellungsverfahren nach Anspruch 7, wobei es sich bei den Monomeren m um Vinylphosphonsäure-Monomere oder Vinyldiphosphonsäure-Monomere handelt und wobei die Reaktion zwischen den Monomeren m und dem Basispolymer von Schritt (E) bei einem pH-Wert von weniger als 8, weiter bevorzugt weniger als 7, durchgeführt wird.

9. Verwendung eines Polymers nach einem der Ansprüche 1 bis 4, das beispielsweise nach dem Verfahren gemäß einem der Ansprüche 5 bis 9 erhalten wird oder erhältlich ist, zur Schlussbehandlung von Metalloberflächen, insbesondere Aluminiumoberflächen, die anzustreichen oder zu lackieren sind, oder zur Reinigung von Metalloberflächen.

10. Verwendung eines Polymers nach Anspruch 4 zur Verschleißschutzausrüstung einer Metalloberfläche, insbesondere einer Aluminiumoberfläche.

## Claims

1. Polyfunctional polymer comprising:
- monomer units u1 carrying phosphonic acid -P(=O)(OH)₂ functional groups in acid form or, in all or part, in deprotonated form;
- monomer units u2 carrying amine functional groups, optionally protonated in all or part;
- monomer units u3 carrying alcohol -OH functional groups;
where the amine functional groups of the monomer units u2 comprise primary amines -NH₂ optionally protonated in all or part in the ammonium NH₃⁺ form.

2. Polyfunctional polymer according to Claim 1, where all the amine functional groups of the monomer units u2 are primary amines -NH₂ optionally protonated in all or part in the ammonium NH₃⁺ form.

3. Polyfunctional polymer according to Claim 1 or 2, which comprises monomer units u3 carrying alcohol -OH functional groups, with an amine/alcohol molar ratio corresponding to the total amount of amine functional groups present on the polymer with respect to the total amount of alcohol functional groups present on the polymer preferably of between 1:4 and 4:1.

4. Polyfunctional polymer according to one of Claims 1 to 3, which additionally comprises hydrophobic groups, preferably linear or branched C₈ to C₂₂ alkyl or alkenyl groups.

5. Process for the preparation of a polyfunctional polymer according to one of Claims 1 to 4, which comprises:
- a step (E1) of radical polymerization of a mixture comprising:
- ethylenically unsaturated monomers m1 carrying phosphonic acid -P(=O)(OH)₂ functional groups in their acid form or, in all or part, in deprotonated form, preferably vinylphosphonic acid CH₂=CH-P(O)(OH)₂ monomers and/or vinyldiphosphonic acid CH₂=C(-PO₃H₂)₂ monomers;
- ethylenically unsaturated monomers m2 carrying protected amine functional groups, preferably N-vinylformamide or N-vinylacetamide monomers;
- ethylenically unsaturated monomers m3 carrying protected alcohol functional groups, such as, for example, vinylacetate monomers;
whereby a polymer P1 carrying phosphonate, protected amine and protected alcohol functional groups is obtained;
then
- a step (E2) of deprotection (typically by hydrolysis) of at least a portion of the protected amine functional groups and of the protected alcohol functional groups of the polymer P1 obtained in step (E1) .

6. Process for the preparation of a polyfunctional polymer according to one of Claims 1 to 4, which comprises a step (E) of grafting monomers m carrying phosphonic acid functional groups, in their acid form or, in all or part, in deprotonated form, to a base polymer comprising monomer units u2 carrying amine functional groups, optionally protonated in all or part, and monomer units u3 carrying alcohol -OH functional groups.

7. Preparation process according to Claim 6, where the monomers m are:
- monomers carrying aldehyde, epoxy or halogen (-Cl, -Br, in particular) functional groups, which are capable of forming covalent bonds by reacting with the amine functional groups carried by the base polymer;
or
- monomers carrying phosphonic acid functional groups which are additionally ethylenically unsaturated, in particular vinylphosphonic acid or vinyldiphosphonic acid monomers.

8. Preparation process according to Claim 7, where the monomers m are vinylphosphonic acid or vinyldiphosphonic acid monomers and where the reaction between the monomers m and the base polymer of step (E) is carried out at a pH of less than 8, more preferentially of less than 7.

9. Use of a polymer according to one of Claims 1 to 4, for example obtained or capable of being obtained according to the process of one of Claims 5 to 9, for the finishing treatment of metal surfaces, in particular aluminium surfaces, which are intended to be painted or varnished, or for the cleaning of metal surfaces.

10. Use of a polymer according to Claim 4, for providing a metal surface, in particular an aluminium surface, with an anti-wear effect.
